# EUROPÄISCHE PATENTSCHRIFT

(11) **EP 3 586 677 B1**
(45) Veröffentlichungstag und Bekanntmachung des Hinweises auf die Patenterteilung: **02.02.2022**
(21) Anmeldenummer: 19181920.0
(22) Anmeldetag: 24.06.2019
(51) Int. Cl.: A47B 88/457, F16H 19/02, E05F 15/632

(54) **SCHUBLADE MIT EINEM LINEARANTRIEB**
DRAWER WITH A LINEAR ACTUATOR
TIROIR AVEC UN ENTRAÎNEMENT LINÉAIRE

(30) Priorität: 26.06.2018 DE 202018103610 U
(43) Veröffentlichungstag der Anmeldung: 01.01.2020
(73) Patentinhaber: Grass GmbH, 6973 Höchst (AT)
(72) Erfinder: Martin, Tobias, 88279 Amtzell (DE)
(74) Vertreter: Otten, Roth, Dobler & Partner mbB Patentanwälte

(56) Entgegenhaltungen:
- AU-B2- 434 266
- DE-B- 1 140 420
- GB-A- 2 398 732
- US-A- 2 204 638
- US-A- 4 246 802
- US-A1- 2002 006 846

## Beschreibung

### Stand der Technik

Es sind verschiedene Antriebsarten für bewegliche Möbelteile oder von Teilen von Haushaltsgeräten, zum Beispiel zum Öffnen und Schließen von Möbeltüren, Möbelklappen, Schubladen, Kühlschrankfächern, Gargutträgern und dergleichen bekannt.

Derartige Antriebe weisen häufig mechanische Energiespeicher auf. Bei modernen Möbeln oder Haushaltsgeräten kommen auch elektrische Antriebe zum Bewegen des bewegbaren Teils relativ zu verbleibenden Elementen des Möbels oder Haushaltsgeräts zum Einsatz, siehe zum Beispiel das Patentdokument GB 2 398 732 A. Bisherige Antriebslösungen sind meist kompliziert, aufwändig in der Montage oder benötigen einen vergleichsweise großen Bauraum.

### Aufgabe und Vorteile der Erfindung

Aufgabe der vorliegenden Erfindung ist es, auf Basis eines Elektroantriebs einen Antrieb zum Bewegen einer Schublade bereitzustellen, der einfach aufgebaut und platzsparend ist.

Diese Aufgabe wird durch den unabhängigen Anspruch gelöst.

In den abhängigen Ansprüchen sind vorteilhafte und zweckmäßige Weiterbildungen der Erfindung aufgezeigt.

Die Erfindung geht aus von einer Schublade mit einem Linearantrieb zur linearen

Bewegung der Schublade wobei der Linearantrieb eine um eine Wellen-Längsachse rotierbare Antriebswelle mit einem Wellen-Antriebsabschnitt der Antriebswelle und eine mit dem bewegbaren Teil koppelbare Schubeinheit umfasst, wobei die Schubeinheit an der Antriebswelle derart aufgenommen ist, dass bei rotierender Antriebswelle die Schubeinheit sich in Richtung der Wellen-Längsachse relativ zur Antriebswelle bewegt. Die Antriebswelle ist vorzugsweise eine einem Elektromotor zugeordnete oder abtriebseitig vom Elektromotor beaufschlagte Welle bzw. eine zur Drehmomentübertragung mit einer Elektromotorwelle gekoppelte Welle. Der Linearantrieb ist als reversibler Antrieb für eine lineare Antriebsbewegung des bewegbaren Teils in beide entgegengesetzte Bewegungs- bzw. Linearrichtungen ausgebildet, also z. B. als Vorwärts- und als Rückwärtsantrieb. Der Linearantrieb dient insbesondere für die exakte Positionierung der Schublade in eine beliebige bzw. gewünschte Position von einer Vielzahl von möglichen Positionen entlang des möglichen angetriebenen Bewegungsweges des bewegbaren Teils wie in eine vollständig offene oder geschlossene oder eine teilgeöffnete bzw. teilgeschlossene Position am Möbel Dies erfolgt zum Beispiel über eine auf den Linearantrieb wirkende übergeordnete Kontrolleinrichtung zur Betriebskontrolle des Linearantriebs, zum Beispiel mit einer Rechner- und Sensoreinheit. Die Sensoreinheit bestimmt und verarbeitet beispielsweise physikalische Messgrößen bzw. Betriebsdaten des bewegbaren Teils, wie Geschwindigkeits-, Beschleunigungs-, Bewegungsrichtungs-, Beladungs- und/oder Positionsdaten. Als Sensoren kommen insbesondere Sensoren bzw. Messfühler zur Erfassung der Geschwindigkeit, der Beschleunigung, der wirkenden Kräfte, der Position und anderer Größen, die in Bezug zum bewegbaren Teil stehen, in Frage.

Der Kern der Erfindung ist darin zu sehen, dass die Schubeinheit mehrere drehbare an jeweils einem Lagerelement der Schubeinheit aufgenommene Treibwalzen umfasst, wobei die Treibwalzen eine Walzen-Grundform aufweisen und mit dem Wellen-Antriebsabschnitt im Kontakt sind und die mehreren Treibwalzen jeweils um eine dazugehörige Treibwalzen-Drehachse drehbar sind, wobei die jeweilige Treibwalzen-Drehachse zur Wellen-Längssachse schräg ausgerichtet ist, so dass im Antriebs-Betrieb des Linearantriebs bei rotierender Antriebswelle die Treibwalzen im Kontakt mit dem Wellen-Antriebsabschnitt in Drehung um die jeweilige Treibwalzen-Drehachse versetzbar sind. Die Wellen-Längsachse der Antriebswelle bildet dabei die Wellen-Rotationsachse der Antriebswelle.

Damit wird ein platzsparender, einfach zu montierender Antriebsstrang für die Bewegung der Schublade erreicht, wobei die Antriebswelle eine rein rotatorische Bewegung ausführt und die Schubeinheit, die mit der Schublade gekoppelt ist, eine rein lineare bzw. translatorische Bewegung ausführt.

Vorteilhaft ist auch, dass als Antriebswelle ein Standard-Profilteil wie ein Zylinderprofil bzw. Rohrprofil verwendet werden kann, was weitere Vorteile hinsichtlich der Materialauswahl, der Lagerung der Antriebswelle und/oder und der getrieblichen Kopplung mit dem Antriebsmotor mit sich bringt.

Erfindungsgemäß lässt sich ein vorteilhafter linearer Antrieb für Schubladen bereitstellen, der die Antriebsbewegung über eine rotierende Antriebswelle bzw. einer Elektromotor-Welle aufnimmt. Insbesondere kann der Linearantrieb mit geringstem Platzbedarf vorzugsweise im Nahbereich der Schublade untergebracht werden.

Der Linearantrieb umfasst insbesondere einen mit der Antriebswelle koppelbaren Elektroantrieb wie einen Elektromotor bzw. Stellmotor. Zwischen dem Elektroantrieb und der Antriebswelle kann eine unmittelbare oder mittelbare Antriebsverbindung vorhanden sein, wie zum Beispiel ein Getriebe. Das Getriebe wie zum Beispiel ein Zahnradgetriebe kann als Winkelgetriebe mit oder ohne Unter- bzw. Übersetzung der Drehzahl ausgebildet sein.

Durch Reibeffekte zwischen der Antriebswelle bzw. einem Wellen-Antriebsabschnitt und den Treibwalzen bzw. einem Treibwalzen-Kontaktabschnitt, die miteinander im Kontakt sind, werden bei angetriebener Rotation der Antriebswelle die Treibwalzen in Drehung versetzt und Kräfte und Momente von der Antriebswelle auf die Schubeinheit übertragen, die wiederum mit der Schublade verbunden ist. Für die Antriebscharakteristik ist die Schrägstellung zwischen der Antriebswelle und den Treibwalzen ausschlaggebend. Dabei wird allein durch die Rotation der Antriebswelle eine Schubbewegung bzw. eine Linearbewegung der Schublade erreicht. Die Richtung bzw. Stärke der Schubbewegung der Schublade ist unter anderem abhängig von der Richtung und Betrag der Schrägstellung bzw. der Neigung der Treibwalzen bzw. deren Drehachse wählbar bzw. hängt von der Drehrichtung der Antriebswelle ab. Die reversibel in beide Drehrichtungen über den Antrieb antreibbare Antriebswelle bestimmt die lineare Bewegungsrichtung der Schubeinheit und damit der Schublade.

Es ist insbesondere herstellungstechnisch und verschleißtechnisch vorteilhaft, dass zwischen der Antriebswelle und den Treibwalzen keine profilierte bzw. ineinandergreifende Kontur und Gegenkontur mit Erhöhungen und Vertiefungen auf dem Wellen-Antriebsabschnitt und/oder auf den damit in Kontakt befindlichen Abschnitten der Treibwalzen notwendig ist.

Die mehreren vorzugsweise drei bis neun, vorzugsweise sechs Treibwalzen sind zur Wellen-Längsachse umfänglich verteilt vorhanden, bevorzugt regelmäßig umfänglich verteilt. Vorzugsweise sind die Treibwalzen-Drehachsen sämtlicher Treibwalzen untereinander versetzt und parallel ausgerichtet zueinander.

Nicht ausgeschlossen ist, dass eine Treibwalze zwei getrennte Walzenabschnitte umfasst, welche um eine gemeinsame Treibwalzen-Drehachse rotieren. Dies kann als in Reihe geschaltete bzw. wirkende Treibwalzen verstanden werden. Die weiteren Treibwalzen mit versetzter aber paralleler Treibwalzen-Drehachse sind dazu als parallel geschaltete bzw. parallel wirkende Treibwalzen anzusehen.

Der Wellen-Antriebsabschnitt ist eine vorzugsweise geschlossene Zylindermantelfläche bzw. zylindrisch oder zumindest stark angenähert zylindrisch. Die Oberfläche des Wellen-Antriebsabschnitt ist glatt oder insbesondere zur Reibeffekt-Erhöhung gegebenenfalls leicht aufgeraut bzw. unregelmäßig oder regelmäßig strukturiert. Entsprechendes gilt für die im Reibkontakt mit der Oberfläche des Wellen-Antriebsabschnitt stehenden Gegenflächen der Treibwalzen wie dem Treibwalzen-Kontaktabschnitt.

Die Antriebswelle ist vorzugsweise eine Hohlwelle oder eine Vollwelle aus einem abhängig von der zu erwartenden Belastung wählbaren Material, zum Beispiel aus einem Stahl-, Aluminium- oder Kunststoffmaterial wie z. B. einem unverstärkten oder faserverstärkten Kunststoffmaterial.

Erfindungsgemäß ist die Länge der Antriebswelle etwas größer als die Nennlänge der Schublade, zum Beispiel circa 20 Millimeter länger als die Länge der Schublade, welche in Bewegungsrichtung der Schublade betrachtet wird.

Die Schubeinheit ist mit der Schublade verbunden zum Beispiel daran direkt oder mit einem Befestigungselement angeschraubt. Bei der Schublade ist die

Schubeinheit vorzugsweise im hinteren Endbereich der Schublade zum Beispiel an einer Rückwand, Seitenwand und/oder einem Schubladenboden oder an einem daran vorhandenen Befestigungselement anbringbar bzw. angebracht z. B. angeschraubt.

Gemäß einer vorteilhaften Ausgestaltung der Erfindung weist die Schubeinheit einen Grundkörper zur Aufnahme von mehreren Lagerelementen auf, wobei jedem Lagerelement eine Treibwalze zugeordnet ist bzw. jedes Lagerelement eine Treibwalze in vorgebbarer Ausrichtung drehbar hält.

Für die Bewegung der Schublade kann genau eine Antriebswelle vorgesehen sein, oder es können mehrere Antriebswellen vorhanden sein, die mit einem gemeinsamen oder mit mehreren Elektromotoren angetrieben werden. An einer Antriebswelle kann zudem genau eine Schubeinheit vorhanden sein oder es sind an einer Antriebswelle zwei oder mehr Schubeinheiten zum gemeinsamen Antrieb der Schublade vorgesehen.

Vorteilhaft ist es, wenn eine Treibwalze einen Kontaktkörper mit einem im Wesentlichen zylindrischen Kontaktabschnitt aufweist, wobei der Kontaktabschnitt mit dem Wellen-Antriebsabschnitt in Kontakt ist.

Der Kontaktabschnitt weist vorzugsweise eine exakt zylindrische Grundform auf oder eine an die Zylinderform stark angenäherte Grundform. Die zylindrische Form des Kontaktabschnitts bezieht sich vorzugsweise auf die Treibwalzen-Drehachse, welche die Zylinderachse des zylindrischen Kontaktabschnitts bildet.

Die Treibwalze weist darüber hinaus vorzugsweise auch Abschnitte auf, die nicht mit der Antriebswelle in Kontakt sind, sondern zur Lagerung der Treibwalze dienen, zum Beispiel bezogen auf die Treibwalzen-Drehachse beidseitig zum Kontaktkörper bzw. Kontaktabschnitt lateral vorhandene Lagerabschnitte wie z. B. Lagerzapfen oder dergleichen. Die Lagerabschnitte weisen bevorzugt ein geringeres Außenmaß auf als der Kontaktkörper bzw. der Kontaktabschnitt.

Es ist auch bevorzugt, wenn sämtliche Treibwalzen der Schubeinheit eine identische Form aufweisen bzw. identisch sind oder zumindest identische Lagerabschnitte besitzen. Es ist aber nicht ausgeschlossen, dass einzelne Treibwalzen der mehreren Treibwalzen einer Schubeinheit untereinander verschieden sind.

Es ist auch vorteilhaft, dass eine Treibwalze einen Kontaktkörper mit einem Kontaktabschnitt aufweist, wobei der Kontaktabschnitt gegenüber einer zylindrischen Außenform eine etwas nach innen gewölbte Außenform und/oder eine etwas nach außen gewölbte Außenform aufweist, wobei der Kontaktabschnitt mit dem Wellen-Antriebsabschnitt in Kontakt ist. Vorzugsweise weist ein Kontaktkörper eine durchgehend einheitlich nach innen gewölbte bzw. konkave oder eine durchgehend einheitlich nach außen gewölbte bzw. konvexe Außenform auf. Bevorzugt aber nicht zwingend sind an einer Schubeinheit sämtliche Treibwalzen untereinander identisch, entweder mit konkavem oder konvexem Kontaktabschnitt ausgebildet. Andere Oberflächenformen des Kontaktabschnitts sind alternativ auch möglich.

Ein weiterer Vorteil besteht darin, dass die mehreren Treibwalzen die gleiche Schrägstellung zur Antriebswelle aufweisen mit jeweils einem gleichen Winkel der Drehachse der Treibwalze zur Wellen-Längsachse der Antriebswelle. Der Winkel zwischen der jeweiligen Treibwalzen Drehachse zur Drehachse der Treibwalze, die mit der Wellen-Längsachse der Antriebswelle zusammenfällt, beträgt vorzugsweise zwischen 5 Winkelgraden und 35 Winkelgraden, vorzugsweise zwischen 15 Winkelgraden und 20 Winkelgraden. Dies ist unter mechanischen und dynamischen Gesichtspunkten vorteilhaft, wobei Aspekte wie Reibung bzw. Verschleiß bzw. Energieverbrauch der Antriebsmotors und Leichtlaufeigenschaften der Schubeinheit an der Antriebswelle berücksichtigt sind.

Der Linearantrieb bzw. die Schubeinheit umfasst vorzugsweise eine Gleitlageranordnung und/oder eine Wälzlageranordnung zur drehbaren Lagerung der Treibwalzen über die Treibwalzen-Lagerabschnitte an einem Lagerkörper der Schubeinheit. Insbesondere sind Abschnitte der Treibwalze bzw. Lagerabschnitte an der Treibwalze zur drehbaren Lagerung der Treibwalze am Lagerkörper vorgesehen. Der Lagerkörper weist hierfür einen entsprechenden passenden Gegenabschnitt zur Aufnahme der Lagerabschnitte der Treibwalze auf. An einer Treibwalze sind vorzugsweise zwei z. B. gegenüberliegende bzw. axial zur Drehachse der Treibwalze endständige Lagerabschnitte vorhanden, zwischen denen der Kontaktkörper ausgebildet ist. Demgemäß umfasst eine Treibwalze vorzugsweise den Kontaktkörper und zwei bevorzugt identische Lagerabschnitte wie z. B. Lagerzapfen. Die Lagerabschnitte sind beispielsweise beidseitig am Kontaktkörper vorhanden bzw. angebracht. Beispielsweise sind die Lagerabschnitte als separate Teile lösbar am Kontaktkörper anbringbar. Es ist aber auch eine einstückige Ausgestaltung der Treibwalze denkbar. Die Lagerabschnitte der Treibwalze sind Teil der Gleitlageranordnung bzw. der Wälzlageranordnung. Am Lagerkörper ist zum Beispiel eine Aufnahmekontur wie beispielsweise eine Ausnehmung zur Aufnahme eines Lagerabschnitts bzw. eines Lagerzapfen der Treibwalze ausgestaltet. Der jeweilige Lagerabschnitt der Treibwalze lässt sich einfach in die Aufnahmekontur einstecken.

Nach einer anderen vorteilhaften Ausbildung der Erfindung weist die Schubeinheit einen Grundkörper auf, wobei der Grundkörper einstückig ausgebildet ist. Eine einstückige Ausbildung des Grundkörpers ist im Hinblick auf die Herstellung der Schubeinheit und deren Montage an bzw. Demontage von der Antriebswelle vorteilhaft.

Alternativ ist eine mehrteilige Gestaltung des Grundkörpers nicht ausgeschlossen.

Der Grundkörper stellt das Bauteil der Schubeinheit mit dem größten Volumen- bzw. Materialanteil dar. Am Grundkörper sind die Treibwalzen unmittelbar oder über Treibwalzen-Lagerelemente, an denen die Treibwalzen drehbar gelagert sind und die an dem Grundkörper angebracht werden, aufgenommen. Die Außenseite des Grundkörpers bildet die nahezu gesamte umfängliche oder die wesentliche Außenseitenfläche der Schubeinheit. Neben dem Grundkörper umfasst demnach die Schubeinheit zumindest die Treibwalzen, vorzugsweise mit jeweils einem zugehörigen Lagerelement, welches die dazugehörige Treibwalze hält. Bevorzugt sind zwei bzw. jeweils auf einer zur Antriebswelle axialen Seite des Grundkörpers vorhandene Deckel der Schubeinheit zugehörig. Die vorzugsweise plattenförmigen Deckel sind mit dem Grundkörper vorzugsweise lösbar verbunden zum Beispiel verschraubt.

Der Grundkörper weist eine auf die Antriebswelle bzw. deren Außenabmessung abgestimmte Durchgangsöffnung auf. Auch die beiden vorzugsweise jeweils einteiligen Deckel weisen jeweils eine entsprechende Durchgangsöffnung auf. Die Antriebswelle greift durch die Durchgangsöffnung im Grundkörper bzw. durch die in Wellen-Längsrichtung zueinander fluchtenden Durchgangsöffnungen in den Deckeln. Die Deckel decken das Innere der Schubeinheit bzw. die Lagerelemente in axialer Richtung nach außen ab. Damit ist sichergestellt, dass die Lagerelemente, die einseitig axial an die Innenseite des betreffenden Deckels anstehen, und damit die Treibwalzen in axialer Richtung an der Schubeinheit fixiert und exakt positioniert sind. Die Deckel verhindern auch einen Schmutzeintrag ins Innere der Schubeinheit.

In Umfangsrichtung zur Durchgangsöffnung bzw. der Antriebswelle ist der einstückige Grundkörper geschlossen bzw. bildet einen umfänglich geschlossenen Ring ohne Trennstelle. Dies ist aus Stabilitäts-, Montage- und Herstellungsgründen, zum Beispiel mit Spritzguss- oder 3D-Druck, vorteilhaft.

Die Schubeinheit ist beispielsweise zumindest angenähert würfel- oder quaderförmig. Vorzugsweise ist die Schubeinheit ohne auf der Außenseite der Schubeinheit vorstehenden bzw. ohne außen vorstehende Abschnitte der Treibwalzen und deren Lagerelemente gestaltet. Die Lagerelemente und die Treibwalzen sind vorzugsweise komplett innerhalb der Schubeinheit bzw. einer Hüllfläche der Schubeinheit bzw. des Grundkörpers untergebracht.

Vorzugsweise sind alle sechs Außenseiten der Schubeinheit eben bzw. flächig gestaltet. Gegebenenfalls vorhandene Schraubmittel sind an der Schubeinheit außenseitig bündig bzw. versenkt vorhanden.

Es ist überdies von Vorteil, wenn die Treibwalzen derart positioniert sind, dass jeweils ein Randabschnitt des Kontaktabschnitts jeder Treibwalze, der radial am nächsten zur Wellen-Längsachse vorhanden ist, bis zu einer Umfangslinie reicht, die mit dem Durchmesser der Antriebswelle korreliert, vorzugsweise zu einer Umfangslinie reicht, die identisch ist mit dem Außenumfang der Antriebswelle.

Die Korrelation schließt eine genaue Übereinstimmung als auch eine geringe definierte Abweichung ein.

Vorzugsweise reichen sämtliche Treibwalzen einer Schubeinheit jeweils mit dem äußeren Randabschnitt des Kontaktabschnitts radial nach innen bis zu der gemeinsamen Umfangslinie, die mit dem Umfang der Antriebswelle bestimmt ist bzw. den Durchmesser der Antriebswelle aufweist. Erfindungsgemäß ist ein reib- und antriebstechnisch vorteilhafter entlang einer Berühr- bzw. Kontaktlinie bzw. ein Linien-Reibkontakt bzw. Linien-Abrollkontakt zwischen der rotierenden Antriebswelle und jeder Treibwalze vorteilhaft eingerichtet.

Damit wird im Idealfall erreicht, dass immer bzw. insbesondere im Antriebsbetrieb des Linearantriebs sämtliche Treibwalzen in einem gleichwirkenden Kontakt mit der Antriebswelle stehen. Damit wird durch Reibungseffekte zwischen der Antriebswelle und den Treibwalzen, die simultan bzw. sich gleichzeitig drehen, die Antriebswirkung über sämtliche Treibwalzen gleichartig erzielt. Über die Lagerung der Treibwalzen in der Schubeinheit werden Kräfte und Momente von der Antriebswelle über die Treibwalzen auf die Schubeinheit übertragbar. Dies ist erfindungsgemäß verschleißminimiert und geräuscharm möglich.

Ein kontaktloser Zustand zwischen einer einzelnen oder von mehreren Treibwalzen und der Antriebswelle wird damit vermieden. Damit tragen vorteilhaft sämtliche Treibwalzen idealerweise gleichartig zum linearen Bewegungsantrieb der Schublade bei.

Demgemäß ist eine exakte vorgebbare Ausgestaltung der Treibwalzen und die genaue bzw. dauerhaft bestimmte Lagerposition aller Treibwalzen in der Schubeinheit für eine optimierte Antriebssituation essentiell.

Die Durchlassöffnung in der Schubeinheit, durch welche die Antriebswelle zentrisch positioniert durchreicht, die in der Regel rund ist, weist vorzugsweise einen geringfügig größeren Durchmesser auf, zum Beispiel im Zehntelmillimeterbereich, als die zylindrische Antriebswelle.

Damit werden feinste Luftdurchlässe bzw. Luftkanäle in der Schubeinheit in Längsrichtung der Antriebswelle bereitgestellt. Dies ist beispielsweise im Hinblick auf eine Kühlung oder einen Abtransport von an der Welle gegebenenfalls anhaftenden geringen Verschmutzungen wie Staubablagerungen vorteilhaft.

Da die Schubeinheit in axialer Richtung der Antriebswelle nur einen Bruchteil bzw. zum Beispiel circa 5 % der Gesamtlänge der Antriebswelle ausmacht, steht die Antriebswelle, abgesehen von Endpositionen der Schubeinheit an den Enden der Antriebswelle, mit Längsabschnitten beidseitig axial an der Schubeinheit über. Die Schubeinheit ist linear über die nahezu gesamte Länge der Antriebswelle verschieblich antreibbar.

Die Schubeinheit bewegt sich dabei rein linear bzw. translatorisch und die Antriebswelle rein rotierend bzw. rotatorisch.

Gemäß einer Modifikation der Erfindung ist eine Treibwalze an einem Lagerelement aufgenommen, wobei das Lagerelement einstückig ist oder zwei zusammensetzbare Lagerelement-Hälften umfasst.

Das Lagerelement ist vorzugsweise ein zu dem Grundkörper der Schubeinheit separates Bauteil, das fest aber vorzugsweise lösbar an dem Grundkörper aufgenommen ist.

Vorzugseise sind die beiden Lagerelement-Hälften bezogen auf die Antriebswelle bzw. die Wellen-Drehachse entlang einer Ebene geteilt, die quer zur Wellen-Drehachse ausgerichtet ist. Die beiden Lagerelement-Hälften sind demgemäß entlang einer Axialebene der Wellen-Drehachse umfänglich geteilt.

Die zwei Lagerelement-Hälften sind vorzugsweise lösbar zusammensetzbar, bzw. wieder auseinandernehmbar.

Bei zusammengesetzten Lagerelement-Hälften und daran aufgenommenen Treibwalzen ist die Treibwalze vorzugsweise verliersicher an dem Lagerelement gehalten. Bevorzugt erst nach dem Trennen der beiden Lagerelement-Hälften kann die Treibwalze vom Lagerelement entnommen werden, zum Beispiel für einen Austausch z. B. bei Beschädigung oder Verschleiß.

Besonders vorteilhaft ist es, wenn die beiden Lagerelement-Hälften identische Bauteile sind. Damit ist der Herstellungsaufwand gering und der Zusammenbau einfach möglich.

Die beiden Lagerelement-Hälften weisen vorzugsweise eine passende Ausnehmung für die Unterbringung der Treibwalze bzw. deren Kontaktkörper und deren Lagerabschnitte auf. Vorzugsweise ist an einer ersten Lagerelement-Hälfte eine erste Lagerstelle für einen ersten Lagerabschnitt der Treibwalze ausgebildet und an einer zweiten Lagerelement-Hälfte ist eine zweite Lagerstelle für einen zweiten Lagerabschnitt der Treibwalze ausgebildet. Beide Lagerelement-Hälften weisen zudem hälftig je einen Raum zur Aufnahme der Hälfte des Kontaktkörpers der Treibwalze auf.

Beide Lagerelement-Hälften sind beispielsweise mit vorzugsweise zwei Öffnungen zum Einstecken jeweils eines Verbindungelements zum Verbinden der beiden Hälften ausgebildet, wobei ein jeweiliges Verbindungselement sowohl in die zugehörige Öffnung in der ersten Lagerelement-Hälfte als auch in der zweiten Lagerelement-Hälfte ausgestaltet ist. Die Verbindungselemente erstrecken sich bei zusammengesteckten Lagerelement-Hälften quer bzw. über die Trennebene der beiden Lagerelement-Hälften hinweg.

Zur drehbaren Aufnahme der Treibwalze in einem Lagerkörper ist zwischen dem Lagerelement und der Treibwalze zum Beispiel eine Gleitlageranordnung oder eine Wälzlageranordnung vorgesehen.

Ein weiterer Vorteil ergibt sich, wenn eine Treibwalze an einem Lagerelement aufgenommen ist, wobei das Lagerelement in eine passende Aufnahme an einem Grundkörper der Schubeinheit einsteckbar oder einschraubbar ist. Dies erleichtert die Montage und Demontage der Schubeinheit. Bevorzugt ist jeder Treibwalze genau ein zugehöriges Lagerelement zugeordnet.

Das Lagerelement ist im Grundkörper so aufgenommen und in der Grundform so gestaltet, dass es sich über einen Teilumfang außen an der Antriebswelle erstreckt, zum Beispiel vorzugsweise über einen Umfang von zum Beispiel 100 Winkelgraden erstreckt. Dazu ist am Grundkörper für jedes Lagerelement eine dazugehörige zum Beispiel axial zugängliche Ausnehmung bzw. Kammer vorhanden.

Vorteilhaft kann demgemäß der Grundkörper der Schubeinheit an der Antriebswelle verbleiben, um die Lagerelemente anzubringen und abzunehmen, was von axialer Seite her erfolgt.

Das jeweilige Lagerelement der Treibwalze ist durch ein Heranbewegen in axialer Richtung zur Antriebswelle an dem Grundkörper der Schubeinheit anbringbar und durch ein Wegbewegen in entgegengesetzter Richtung wieder abnehmbar.

Für eine radiale Bedienung der Schubeinheit sind alternativ oder zusätzlich zur axialen Anordnung auch vorzugsweise mehrere radial zugängliche bzw. radial nach außen offene Ausnehmungen an dem Grundkörper der Schubeinheit auf einer Umfang-Außenseite an dem Grundkörper für mehrere Lagerelemente mit Treibwalze denkbar. Die Ausnehmungen bzw. Kammern sind auch radial innen zur Antriebswalze offen, so dass bei eingesetztem Lagerelement der Kontakt der jeweiligen Treibwalze mit der Antriebswelle erfolgen kann.

Dann sind dazugehörige Deckel umfänglich verteilt radial außen an dem Grundkörper zur Abdeckung der Lagerelemente vorzusehen. Wenn die Schubeinheit bzw. der Grundkörper Würfel- oder quaderförmig ist, können bei radialer Bedienung vier Flächenseiten des Grundkörpers zum Einsetzen der Lagerelemente genutzt werden, bei axialer Bedienung sind zwei axiale Seiten des Grundkörpers nutzbar.

Vorteilhaft weist die Schubeinheit einen Grundkörper auf, der mehrere Aufnahmen umfasst, wobei in jede Aufnahme jeweils ein Lagerelement für eine Treibwalze insbesondere lösbar einsetzbar ist.

Die Lagerelemente sind auf einer axial zur Antriebswelle bzw. deren Wellen-Längsachse ausgerichteten Seite des Grundkörpers daran einsetzbar und wieder wegnehmbar. Vorzugsweise sind am Grundkörper alle Aufnahmen identisch gestaltet und damit entsprechend sämtliche Lagerelemente identisch untereinander. Es ist bevorzugt, wenn die in ihrer jeweiligen Aufnahme eingesetzten Lagerelemente in der Aufnahme selbstsichernd aber lösbar gehalten sind, unter Überwindung einer Haltewirkung auf die Lagerelemente. Alternativ oder zusätzlich werden die Lagerelemente am Grundkörper mit den Deckeln gesichert.

Ein Vorteil der Erfindung ergibt sich, wenn eine Treibwalze in einem Lagerelement lösbar eingesetzt ist, z. B. verrastet oder eingeschnappt oder angeschraubt ist.

Das Lagerelement weist zum Beispiel einen geeignet abgestimmten Hinterschnitt auf, so dass die Treibwalze mit einem dazu passenden Lagerabschnitt wie z. B. einem Lagerzapfen lösbar am Lagerelement einsetzbar ist und im eingesetzten Zustand rotierbar bzw. drehbar um die Treibwalzen-Drehachse ist.

Bevorzugt sind die mehreren Treibwalzen umfänglich zur Antriebswelle bzw. der Durchgangsöffnung in der Schubeinheit gleichmäßig am Umfang bzw. regelmäßig beabstandet angeordnet. Wenn die Schubeinheit zum Beispiel sechs Treibwalzen umfasst, sind diese umfänglich zur Antriebswelle um jeweils 60 Winkelgrade versetzt zueinander bzw. zu den beiden umfänglich benachbarten Treibwalzen um jeweils 60 Winkelgrade beabstandet positioniert.

Weiter liegt ein Vorteil darin, dass am Grundkörper der Schubeinheit zwei Einsetzseiten vorhanden sind, wobei eine erste Einsetzseite eine zu einer ersten zur Antriebswelle axialen Richtung hin offene Aufnahme für die Unterbringung von zumindest einem Lagerelement aufweist, und wobei eine zweite Einsetzseite eine zu einer zweiten zur Antriebswelle axialen Richtung hin offene Aufnahme für eine Unterbringung eines weiteren Lagerelements aufweist.

Am Grundkörper können demgemäß auf beiden axialen Einsetzseiten eine Aufnahme oder mehrere vorzugsweise beidseitig jeweils mehrere Aufnahmen zur Aufnahme von je einem Lagerelement mit je einer Treibwalze vorhanden sein. Insbesondere sind vorzugsweise auf beiden Einsetzseiten gleich viele bzw. jeweils z. B. drei Aufnahmen wie zum Beispiel kammerartige axial offene Aufnahmevertiefungen vorhanden, so dass am Grundkörper sechs Treibwalzen gleichmäßig und gleichartig bzw. mit untereinander parallelen Treibwalzen-Drehachsen anordenbar sind. Die drei umfänglich versetzten Treibwalzen auf der ersten Einsetzseite des Grundkörpers sind auf der gleichen axialen Position vorhanden. Die drei weiteren umfänglich versetzten Treibwalzen auf der zweiten Einsetzseite sind untereinander ebenfalls auf der gleichen axialen Position vorhanden, die sich von der axialen Position der Treibwalzen auf der ersten Einsetzseite unterscheidet. Dieser axiale Versatz spielt sich innerhalb der axialen Länge des Grundkörpers ab.

Bei entsprechend am Grundkörper insgesamt sechs Aufnahmen bzw. Treibwalzen sind auf der ersten wie auch auf der zweiten Einsetzseite die drei Aufnahmen in Umfangsrichtung um jeweils 120 Winkelgrade versetzt. Vorzugsweise sind auf der ersten Einsetzseite die Aufnahmen in axialer Richtung nicht fluchtend zu den Aufnahmen auf der zweiten Einsetzseite sondern in Umfangsrichtung versetzt. Bei jeweils drei Aufnahmen bzw. insgesamt sechs Lagerelementen bzw. Treibwalzen sind die Aufnahmen auf der ersten Einsetzseite daher umfänglich um 60 Winkelgrade zu den Aufnahmen auf der zweiten Einsetzsete versetzt.

### Die Erfindung erstreckt sich auch auf eine

Schublade mit einem Linearantrieb nach einer der vordiskutierten Ausbildungen. Damit lassen sich die diskutierten Vorteile entsprechend für die Schublade erzielen.

Die Schublade weist vorzugsweise Halterungen zur Lagerung der drehbaren insbesondere horizontal oder vertikal ausgerichteten Antriebswelle an verschiedenen Axialpositionen der Antriebswelle auf. Damit wird die Antriebswelle exakt gerade in ihrer Sollposition gehalten. Die Halterungen sind über die Länge der Antriebswelle z. B. an einer außenliegenden Unterseite der Schublade vorhanden, beispielsweise angeschraubt.

Bei einer Schublade ist die Antriebswelle vorzugsweise unterhalb des Schubladenbodens der Schubeinheit bezogen zur Breite der Schublade beispielsweise mittig in Längsrichtung der Schublade vorhanden. Die linear antreibbare Schubeinheit ist fest mit der Schublade verbunden, vorzugsweise an einer Rückseite der Schublade. Der mit der Antriebswelle gekoppelte Antriebsmotor samt Getriebe ist vorzugsweise fest an einem Abschnitt des positionsfesten Teils des Möbels bzw. Haushaltsgeräts verbunden, zum Beispiel an einer Möbelrückwand befestigt.

Vorteilhaft ist es, wenn eine Antriebseinheit derart vorhanden ist, dass eine treibende Welle der Antriebseinheit winklig vorzugsweise senkrecht zur Wellen-Längsachse der Antriebswelle steht. Damit kann auf engstem Raum die Schublade angetrieben werden.

Vorzugsweise ist eine Winkelgetriebe-Anordnung zur Drehübertagung von einer Abtriebswelle der Antriebseinheit bzw. des E-Motors auf die Antriebswelle vorgesehen. Die Welle des Antriebsmotors steht vorzugsweise senkrecht bzw. vertikal und die Antriebswelle steht horizontal bzw. allgemein in Richtung der Linear-Bewegungsrichtung der Schublade.

Die Erfindung betrifft darüber hinaus ein Möbel mit einer Schublade, wie z. B. ein Küchenmöbel mit einer Schublade oder mit mehreren Schubladen, wobei eine Schublade nach einer der vorgenannten Varianten bzw. mit einem diskutierten Linearantrieb vorgesehen ist.

### Figurenbeschreibung

Weitere Merkmale und Vorteile der Erfindung sind anhand der nachfolgend beschriebenen und in den Figuren schematisiert dargestellten Ausführungsbeispiele der Erfindung näher dargelegt.

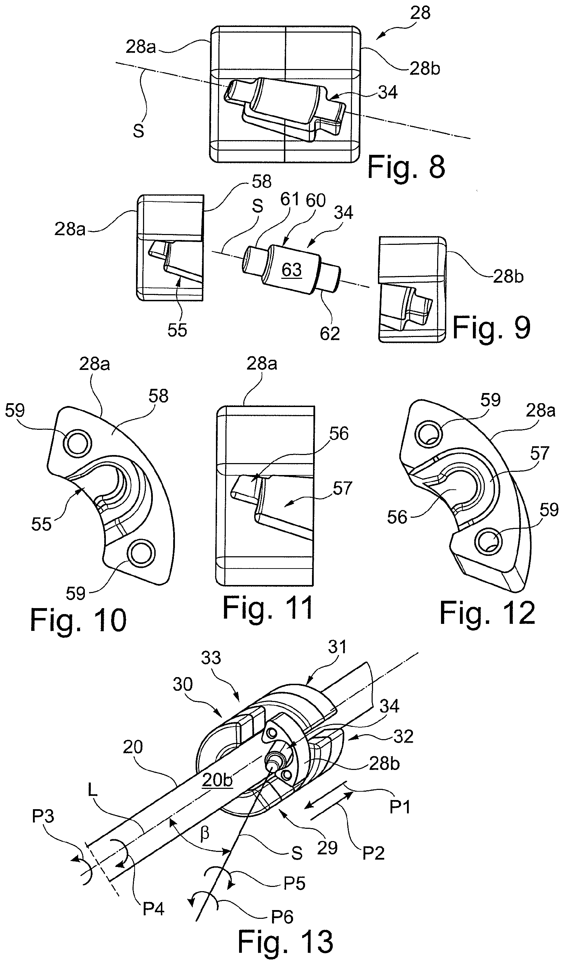

Im Einzelnen zeigt:
Fig. 1 eine geschnittene Ansicht auf einen Ausschnitt eines erfindungsgemäßen Möbels in einem rückwärtigen Teil mit einem hinteren Bereich eines am Möbel bewegbaren Möbelteils und daran angebrachtem, teilweise gezeigtem erfindungsgemäßen Linearantrieb,
Fig. 2 den erfindungsgemäßen Linearantrieb aus Fig. 1 in Komplettansicht perspektivisch schräg von oben,
Fig. 3 den Linearantrieb gemäß Fig. 2 von der Seite mit gestrichelt gezeigter Schublade in einer eingefahrenen Position und einer angedeutet ersichtlichen ausgefahrenen Position der Schublade,
Fig. 4 einen Teil des Linearantriebs mit einer Schubeinheit und einer Teillänge einer Antriebswelle von der Seite,
Fig. 5 die Schnittansicht gemäß der Linie A-A in Fig. 4,
Fig. 6 den Ausschnitt gemäß Fig. 4 perspektivisch schräg von oben jedoch unter Weglassung eines Deckels der Schubeinheit,
Fig. 7 die Anordnung gemäß Fig. 4 von vorne,
Fig. 8 ein Lagerelement des erfindungsgemäßen Linearantriebs mit einer am Lagerelement drehbar aufgenommenen Treibwalze,
Fig. 9 die Anordnung gemäß Fig. 8 in Explosionsdarstellung,
Fig. 10-12
   eine Lagerelement-Hälfte des Lagerelements gemäß Fig. 8 in einer stirnseitigen Ansicht (Fig. 10), in einer um 90 Winkelgrade projizierten Ansicht (Fig. 11) und in einer stirnseitigen Ansicht um 15 Winkelgrade gedrehter Ansicht (Fig. 12),

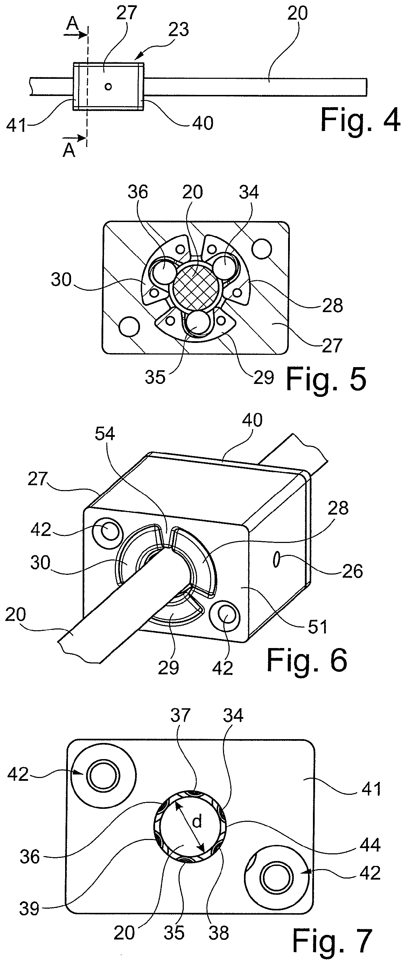

Fig. 13 die Anordnung gemäß Fig. 6, wobei von der Schubeinheit nur die Lagerelemente dargestellt sind und von einem Lagerelement mit Treibwalze eine Lagerelement-Hälfte weggelassen ist,
Fig. 14-16
   jeweils ein Schnitt durch ein Lagerelement an einer Antriebswelle eines erfindungsgemäßen Linearantriebs, wobei eine jeweils andere Treibwalze vorhanden ist,

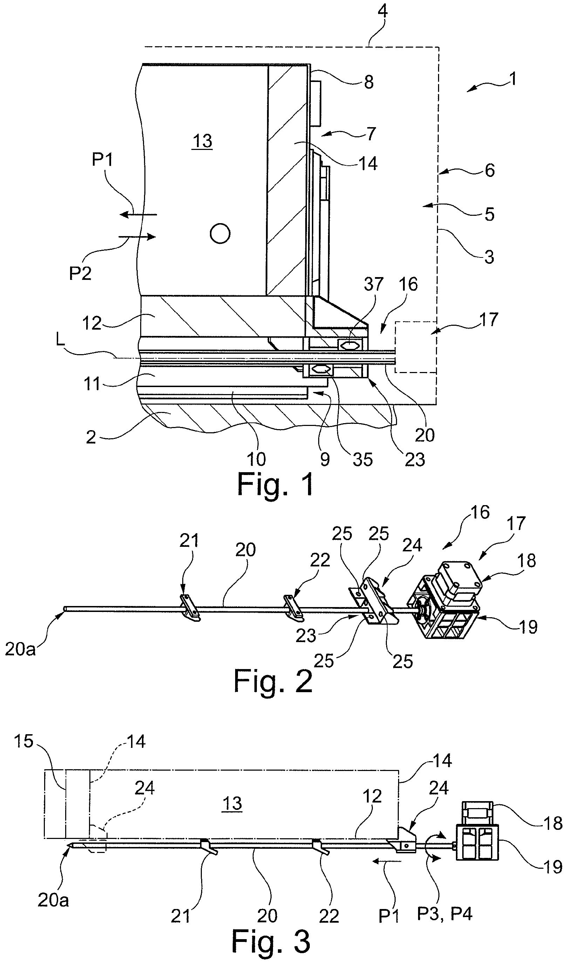

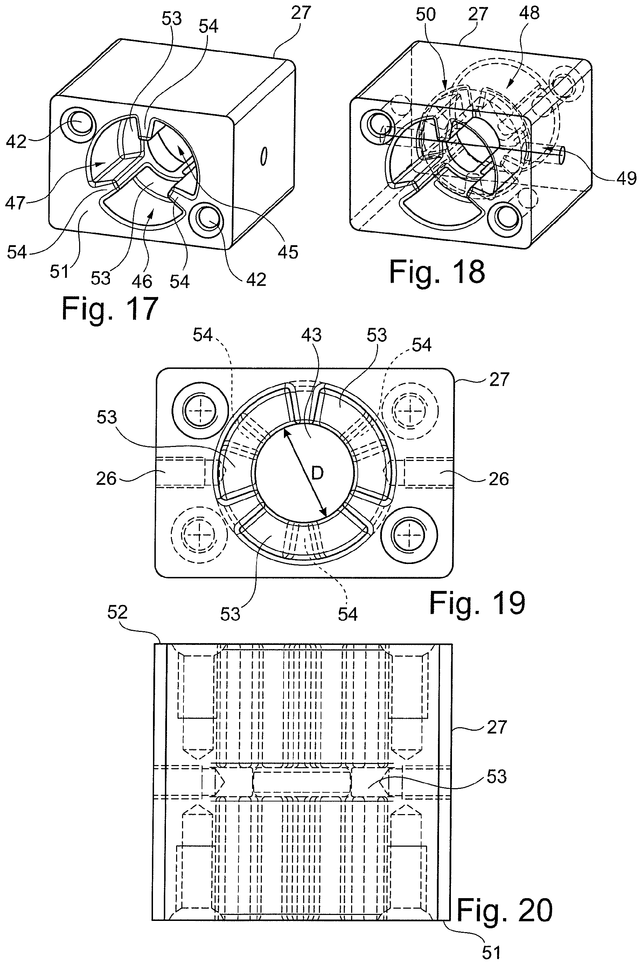

Fig. 17 ein Grundkörper der Schubeinheit gemäß der Fig. 1 bis 7 in perspektivischer Ansicht,
Fig. 18 den Grundkörper in der Ansicht gemäß Fig. 17, bei dem die verdeckten Umrisslinien gestrichelt dargestellt sind und
Fig. 19-20 den Grundkörper gemäß Fig. 17 in einer Frontansicht und einer Ansicht von oben, bei dem die verdeckten Umrisslinien gestrichelt dargestellt sind.

In Fig. 1 ist ein erfindungsgemäßes Möbel 1 mit einem Unterboden 2, einer Möbelrückwand 3 und einem Oberboden 4, die einen Möbelkorpus 6 des Möbels 1 bilden, teilweise und stark schematisiert dargestellt. In einem Innenraum 5 des Möbels 1 ist ein als Schublade 8 ausgebildetes Möbelteil 7 vorhanden, welches gegenüber dem Möbelkorpus 6 in die horizontalen Richtungen P1 und P2 verschieblich bzw. bewegbar ist. Die Schublade 8 ist hierfür über zwei jeweils seitlich unterhalb an der Schublade 8 angeordnete Schienen-Führungseinheiten 9 mit jeweils zueinander teleskopierbaren Schienen 10, 11 am Möbelkorpus 6 aufgenommen und horizontal bzw. in eine Öffnungsrichtung P1 und eine Schließrichtung P2 relativ zum Möbelkorpus 6 hin und her verschieblich. Die Schienen-Führungseinheiten 9 weisen zum Beispiel jeweils eine an einer jeweiligen Seitenwand des Möbelkorpus 6 befestigte Korpusschiene 10 und eine daran verschiebliche Schubladenschiene 11 auf, die mit der Schublade 8 verbunden ist. Bei als Vollauszug ausgestalteten Führungseinheiten 9 ist jeweils eine zwischen den Schienen 10 und 11 wirkende Mittelschiene vorhanden.

Die oben offene Schublade 8 weist einen Schubladenboden 12, zwei gegenüberliegende vertikale Seitenwände 13, eine Rückwand 14 und gegenüber der Rückwand 14 eine in Fig. 1 nicht ersichtliche Schubladenfront 15 auf.

Zur angetriebenen Bewegung der Schublade 8 in Richtung P1 und zurück in Richtung P2, ist ein erfindungsgemäßer Linearantrieb 16 vorgesehen. Der Linearantrieb 16 wirkt zwischen dem Möbelkorpus 6 und dem bewegbaren Möbelteil 7 bzw. der Schublade 8.

Fig. 2 zeigt den Linearantrieb 16 in Alleindarstellung. Der Linearantrieb 16 umfasst einen Motor- und Getriebeblock 17 mit einem Antriebsmotor 18 und einem Getriebe 19 bzw. mit einem 90-Winkelgrade-Winkelgetriebe zum Drehantrieb bzw. drehenden bzw. rotatorischen Antrieb einer Antriebswelle 20 des Linearantriebs 16. Die Antriebswelle 20 ist gemäß Fig. 1 als hohle Zylinderwelle ausgestaltet und weist eine zentrische im Nutzzustand der Schublade 8 horizontal ausgerichtete Wellen-Längsachse L auf.

Der Antriebsmotor 18 wird über eine nicht gezeigte Kontrolleinheit zur Kontrolle des Betriebs des Linearantriebs 16 kontrolliert bzw. geregelt. Eine Bedienperson wirkt über mit der Kontrolleinheit kommunizierende Bedienmittel, wie z. B. einen Schalter, auf die Kontrolleinheit ein, um die Schublade 8 in Richtung P1 oder P2 angetrieben mit dem Antriebsmotor 18 zu bewegen und in eine Schließ-, Öffnungs- bzw. eine von beliebig vielen möglichen dazwischenliegenden anderen Stillstandstellungen zu verfahren.

Der Motor- und Getriebeblock 17 ist zum Beispiel innenseitig an der Möbelrückwand 3 befestigt. Alternativ kann der Motor- und Getriebeblock 17 auch an anderer Stelle zum Beispiel an dem Unterboden 2 oder dem Oberboden 4 oder an Möbelkorpus-Seitenwänden fixiert sein.

Aufgrund der Länge der Antriebswelle 20 ist die Antriebswelle 20 von zumindest einem Fangelement, hier von zwei Fangelementen 21 und 22 sicher umfänglich gehalten. Die an der Unterseite des Schubladenbodens 12 befestigten bzw. angeschraubten beiden fluchtenden Fangelemente 21, 22 weisen jeweils ein Durchgangsloch zum Durchgreifen der Antriebswelle 20 auf. Die Antriebswelle 20 ist an ihrem vorderen Ende 20a verjüngend ausgebildet.

Der Linearantrieb 16 weist außerdem eine linear an der Antriebswelle 20 bewegbare Schubeinheit 23 auf, die auf der Antriebswelle 20 aufgenommen ist und in Richtung der Wellen-Längsachse L angetrieben verschieblich ist, wenn die Antriebswelle 20 rotiert.

Zur Kopplung der Bewegung der Schubeinheit 23 mit der Schublade 8 ist ein Befestigungselement 24 vorgesehen, das zum Beispiel winkelförmig ist und an der Schublade 8 fest angebracht bzw. über Bohrungen 25 mit dem Schubladenboden 12 und der Rückwand 14 verbunden bzw. verschraubt ist. Die Schubeinheit 23 ist selbst über Bohrungen 26 und nicht gezeigte Schrauben mit dem Befestigungselement 24 fest aber lösbar verbunden.

Grundsätzlich ist es möglich, dass die Schubeinheit 23 unmittelbar mit der Schublade 8 verbunden oder daran integriert vorhanden ist, also ohne das Befestigungselement 24.

In Fig.3 ist das Befestigungselement 24 mit der Schubeinheit 23 in Richtung P2 so weit zurückgefahren, dass die Schublade 8 sich in einer eingefahrenen Position im Innenraum 5 des Möbels 1 befindet. Eine gepunktet und teilweise dargestellte nahezu vollständig bzw. maximal ausgefahrene Position der Schublade 8 ist in Fig. 3 ebenfalls ersichtlich, wobei die Schublade 8 aus dem nicht dargestellten Innenraum 5 des Möbels 1 herausgefahren ist und so ein Nutzer auf das Innere der Schublade 8 zugreifen kann. Das Befestigungselement 24 am hinteren Ende der Schublade 8 bzw. an der Rückwand 14 befindet sich dabei nahe dem vorderen Ende 20a der Antriebswelle 20.

Eine Teillänge der Antriebswelle 20 mit der daran vorhandenen Schubeinheit 23 zeigen die Fig. 4 bis 7, wobei die Antriebswelle 20 gemäß der Fig. 4 bis 7 beispielhaft aus einem Vollmaterial besteht.

Die Schubeinheit 23 weist vorzugsweise einen hier einstückigen Grundkörper 27 mit daran vorhandenen identisch geformten Lagerelementen 28-33 auf, wobei jedes Lagerelement 28-33 jeweils eine Treibwalze 34-39 aufnimmt. Außerdem umfasst die Schubeinheit 23 zwei Deckel 40, 41 die jeweils auf axial zur Antriebswelle 20 vorhandenen Seiten des Grundkörpers 27 daran mit Hilfe von Bohrungen 42 im Grundkörper 27 und in den Deckeln 40, 41 angeschraubt sind.

Der Grundkörper 27 weist eine zylindrische Durchgangsöffnung 43 zum Durchgreifen der Antriebswelle 20 auf. Der Außen-Durchmesser D der Durchgangsöffnung 43 ist zum Beispiel im Zehntelmillimeterbereich größer als der Außendurchmesser d der Antriebswelle 20. Vorzugsweise weisen die Deckel 40 und 41 jeweils eine kreisrunde Öffnung 44 auf, die einen mit dem Durchmesser D der Durchgangsöffnung 43 vorzugsweise übereinstimmenden Durchmesser besitzen.

Im vorzugsweise einstückigen Grundkörper 27 sind mehrere vertiefte Aufnahmen 45-50 vorhanden, wobei in jede Aufnahme 45-50 jeweils ein Lagerelement der Lagerelemente 28-33 mit jeweils dazugehöriger Treibwalze 34-39 eingesetzt ist.

Die sechs Aufnahmen 45-50 sind am Grundkörper 27 jeweils axial nach außen offen und untereinander in der Form identisch und umfänglich zur Durchgangsöffnung 43 gleichmäßig verteilt vorhanden bzw. jeweils um 60 Winkelgrade umfänglich versetzt, so dass entsprechend die Treibwalzen 34-39 um jeweils 60 Winkelgrade zueinander umfänglich versetzt bzw. außen um die Durchgangsöffnung 43 verteilt vorhanden sind, was z. B. Fig. 7 veranschaulicht.

Außerdem sind drei Aufnahmen 45-47 auf einer ersten axialen Seite des Grundkörpers 27 vorhanden und drei Aufnahmen 48-50 auf einer zweiten axialen Seite des Grundkörpers 27 vorhanden. Auf jeder axialen Seite des Grundkörpers sind dementsprechend die drei Aufnahmen 45-47 bzw. 48-50 nicht axial fluchtend zur anderen Seite, sondern umfänglich um jeweils 120 Winkelgrade zueinander versetzt, so dass sich die zur Durchgangsöffnung 43 und damit zur diese konzentrisch durchgreifenden Antriebswelle 20 umfänglich gleichmäßige Verteilung der sechs Treibwalzen 34-39 ergibt.

Jede Aufnahme 45-50 bildet segmentförmige bzw. über einen Teilumfang von etwa 100 Winkelgraden eine teil-ringhülsenförmige Vertiefung, in welcher jeweils ein Lagerelement 28-33 axial vorzugsweise zu einer jeweiligen axialen ebenen Stirnfläche 51 bzw. 52 des Grundkörpers 27 versenkt unterbringbar ist. Dabei stehen die jeweiligen Lagerelemente 28-33 axial einseitig an einem im Inneren des Grundkörpers 27 vorhandenen Boden 53 an, der beidseitig für sämtliche Aufnahmen 45-50 als axiale Anschlagfläche insbesondere beim Einstecken bzw. Einschieben der Lagerelemente 28-33 wirksam ist.

Auf beiden axialen Seiten des Grundkörpers 27 ist jeweils zwischen zwei umfänglich benachbarten Aufnahmen 45-50 jeweils ein in axialer Richtung sich erstreckender Steg 54, der sich von der Stirnseite 51 bzw. 52 bis zum Boden 53 erstreckt, vorhanden. Die insgesamt sechs Stege 54 bilden für ein eingesetztes Lagerelement 28-33 in beide Umfangsrichtungen einen Anschlag bzw. dienen zur exakten umfänglichen Positionierung der Lagerelemente 28-33.

Die Lagerelemente 28-33 sind untereinander identisch. In den Figuren 8 bis 13 ist zur Beschreibung der Lagerelemente 28-33 mit der jeweiligen daran drehbar angebrachten Treibwalze 34-39 das Lagerelement 28 mit der Treibwalze 34 exemplarisch herausgegriffen. Fig. 8 zeigt das zusammengesetzte Lagerelement 28 mit daran funktionsrichtig eingesetzter Treibwalze 34. Die Treibwalze 34 ist in dem Lagerelement 28 bzw. einem vertieften Abschnitt des Lagerelements 28 eingesetzt oder z. B. verrastet oder eingeschnappt.

Das Lagerelement 28 besteht aus zwei vorzugsweise lösbar zusammengesetzten Lagerelement-Hälften 28a und 28b, die identisch sind. Daher wird nachfolgend die Lagerelement-Hälfte 28a beschrieben, wobei Entsprechendes für die Lagerelement-Hälfte 28b gilt.

Die Lagerelement-Hälfte 28a, welche mit einer radial innenliegenden Seite an die Durchgangsöffnung 43 heranreicht bzw. diese teils begrenzt, weist auf der radial inneren Seite eine passend ausgebildete muldenartige Vertiefung 55 auf.

Die Vertiefung 55 umfasst, abgestimmt auf die Treibwalze 34, einen schmalen Walzensitz 56 und einen breiteren Freilaufabschnitt 57, der sich an den Walzensitz 56 über einen mehrstufigen bzw. absatzartigen Übergang anschließt. Der Freilaufabschnitt 57 ist zu einer ebenen axialen Trennfläche 58 der Lagerelement-Hälfte 28a offen und schließt bei zusammengesetzten Lagerelement-Hälften 28a, 28b direkt an die Trennfläche 58 der Lagerelement-Hälfte 28b an. Der vertiefte Abschnitt des zusammengesetzten Lagerelements 28 umfasst demgemäß einen breiten mittleren Bereich aus den beiden Freilaufabschnitten 57 und jeweils einen in axialer Richtung außen jeweils einen anschließenden schmaleren Walzensitz 56. Der vertiefte Abschnitt des zusammengesetzten Lagerelements 28 ist schräg zur Axialrichtung bzw. zur Achse der Durchgangsöffnung 43 im Grundkörper ausgerichtet, so dass die Drehachsen S der Treibwalzen 34 bis 39 im Grundkörper 27 untereinander parallel sind und den gleichen Winkel β zur Wellen-Längsachse L bzw. zur Rotationsachse der Antriebswelle 20 aufweisen (s. Fig. 13).

Die beiden Lagerelement-Hälften 28a, 28b werden zum Beispiel über darin passend vorbereitete Löcher 59 und darin einsteckbare Verbindungsstifte (nicht gezeigt) lösbar miteinander verbunden.

Die Treibwalze 34 weist einen mittleren Kontaktkörper 60 und zwei jeweils seitlich daran anschließende identische Drehlagerabschnitte 61 und 62 auf. Die Treibwalze 34 kann einstückig sein oder die beiden Drehlagerabschnitte 61 und 62 sind mit dem Kontaktkörper 60 verbunden zum Beispiel lösbar daran angebracht. Die Außenseite des Kontaktkörpers 60 bildet einen Kontaktabschnitt 63 im abrollenden Reibkontakt mit einer zylindrischen Außenseite der Antriebswelle 20, die einen Antriebsabschnitt 20b zur Erzielung einer Antriebswirkung auf die Treibwalzen 34-39 bzw. die Schubeinheit 27 darstellt. Der Antriebsabschnitt 20b ist vorteilhaft die zylindrische Mantelfläche der Antriebswelle 20.

Fig. 13 zeigt zur besseren Darstellung der räumlichen Verhältnisse der an der Antriebswelle 20 angeordneten Schubeinheit lediglich die Lagerelemente 28-33, wobei das Lagerelement 33 verdeckt ist und wobei von dem Lagerelement 28 die Lagerelement-Hälfte 28a weggelassen ist, so dass die Treibwalze 34 ersichtlich ist.

Bei in eine der beiden möglichen Drehrichtungen P3 oder P4 angetrieben rotierenden Antriebswelle 20 werden durch Reibeffekte zwischen der Oberfläche des jeweiligen Kontaktkörpers 60 der sechs Treibwalzen 34-39 bzw. des Kontaktabschnitts 63 und der Oberfläche des Wellen-Antriebsabschnitts bzw. des Antriebsabschnitts 20b alle sechs Treibwalzen 34-39 simultan in entsprechende Drehung in Richtung P5 oder P6 versetzt. Die gemeinsam entsprechend drehenden Treibwalzen 34-39, erzeugen eine Kraftwirkung in Richtung P1 oder P2 bzw. eine rein lineare Antriebswirkung auf die Schubeinheit 23 und damit die Schublade 8, so dass sich die Schublade 8 abhängig von der Rotationsrichtung P4 bzw. P5 linear in Richtung P1 oder P2 bewegt.

Ein Mitdrehen der Schubeinheit 23 um die rotierende Antriebswelle 20 ist durch die feste Verbindung der Schubeinheit 23 mit der Schublade 8 ausgeschlossen.

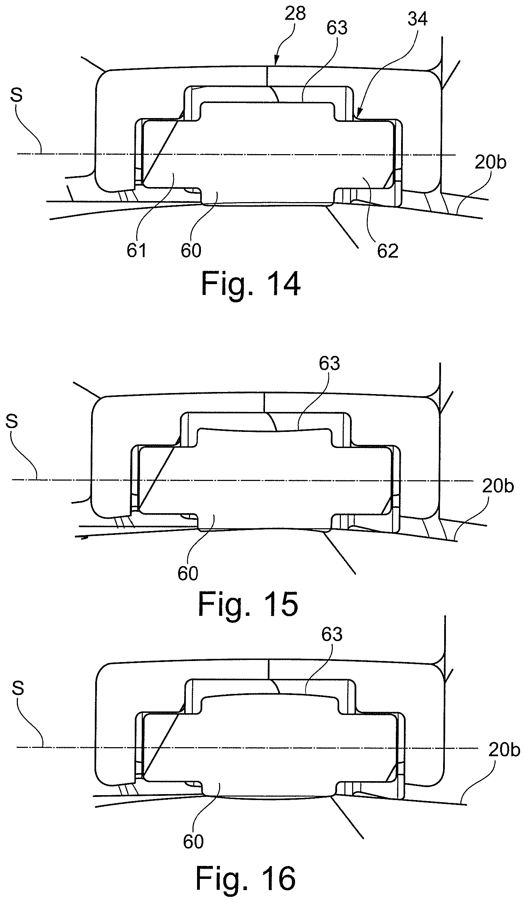

In den Fig. 14 bis 16 sind beispielhaft für die Treibwalze 34 mögliche vorteilhafte Formen des Kontaktkörpers 60 dargestellt im Reibkontakt mit dem Antriebsabschnitt 20b der Antriebswelle 20.

In dem dargestellten Schnitt gemäß der Treibwalzen-Drehachse S weist der Kontaktkörper 60 gemäß Fig. 14 eine außen zylindrische Form auf, mit einer Schnittlinie des Kontaktabschnitts 63 parallel zur Treibwalzen-Drehachse S.

In dem dargestellten Schnitt gemäß der Treibwalzen-Drehachse S weist der Kontaktkörper 60 gemäß Fig. 15 außen eine gegenüber der zylindrische Form nach innen gewölbte bzw. konkave Form auf, mit einer nach innen gebogenen Schnittlinie des Kontaktabschnitts 63.

In dem dargestellten Schnitt gemäß der Treibwalzen-Drehachse S weist der Kontaktkörper 60 gemäß Fig. 16 außen eine gegenüber der zylindrische Form nach außen gebogene bzw. konvexe Form auf, mit einer nach außen gewölbten Schnittlinie des Kontaktabschnitts 63.

In allen drei Ausführungen wird durch Rotation der Antriebswelle 20 die jeweilige Treibwalze 34 um die Treibwalzen-Drehachse S in Drehung versetzt und dabei eine Schubwirkung auf die Schubeinheit 27 relativ zur Antriebswelle 20 erzielt.

**Bezugszeichenliste:**

| | | | |
|---|---|---|---|
| 1 | Möbel | 31 | Lagerelement |
| 2 | Unterboden | 32 | Lagerelement |
| 3 | Möbelrückwand | 33 | Lagerelement |
| 4 | Oberboden | 34 | Treibwalze |
| 5 | Innenraum | 35 | Treibwalze |
| 6 | Möbelkorpus | 36 | Treibwalze |
| 7 | Möbelteil | 37 | Treibwalze |
| 8 | Schublade | 38 | Treibwalze |
| 9 | Schienen-Führungseinheit | 39 | Treibwalze |
| 10 | Korpusschiene | 40 | Deckel |
| 11 | Schubladenschiene | 41 | Deckel |
| 12 | Schubladenboden | 42 | Bohrung |
| 13 | Seitwand | 43 | Durchgangsöffnung |
| 14 | Rückwand | 44 | Öffnung |
| 15 | Schubladenfront | 45 | Aufnahme |
| 16 | Linearantrieb | 46 | Aufnahme |
| 17 | Motor- / Getriebeblock | 47 | Aufnahme |
| 18 | Antriebsmotor | 48 | Aufnahme |
| 19 | Getriebe | 49 | Aufnahme |
| 20 | Antriebswelle | 50 | Aufnahme |
| 20a | Ende | 51 | Stirnfläche |
| 20b | Antriebsabschnitt | 52 | Stirnfläche |
| 21 | Fangelement | 53 | Boden |
| 22 | Fangelement | 54 | Steg |
| 23 | Schubeinheit | 55 | Vertiefung |
| 24 | Befestigungselement | 56 | Walzensitz |
| 25 | Bohrung | 57 | Freilaufabschnitt |
| 26 | Bohrung | 58 | Trennfläche |
| 27 | Grundkörper | 59 | Loch |
| 28 | Lagerelement | 60 | Kontaktkörper |
| 28a | Lagerelement-Hälfte | 61 | Drehlagerabschnitt |
| 28b | Lagerelement-Hälfte | 62 | Drehlagerabschnitt |
| 29 | Lagerelement | 63 | Kontaktabschnitt |
| 30 | Lagerelement-Hälfte | | |

## Patentansprüche

1. Schublade mit einem Linearantrieb (16) zur linearen Bewegung der Schublade, wobei der Linearantrieb (16) eine um eine Wellen-Längsachse rotierbare Antriebswelle (20) mit einem Wellen-Antriebsabschnitt (20b) der Antriebswelle (20) und eine mit dem bewegbaren Teil koppelbare Schubeinheit (23) umfasst, wobei die Schubeinheit (23) an der Antriebswelle (20) derart aufgenommen ist, dass bei rotierender Antriebswelle (20) die Schubeinheit (23) sich in Richtung der Wellen-Längsachse relativ zur Antriebswelle (20) bewegt, wobei die Schubeinheit (23) mehrere drehbare an jeweils einem Lagerelement (28-33) der Schubeinheit (23) aufgenommene Treibwalzen (34-39) umfasst, wobei die Treibwalzen (34-39) eine Walzen-Grundform aufweisen und mit dem Wellen-Antriebsabschnitt (20b) im Kontakt sind und die mehreren Treibwalzen (34-39) jeweils um eine dazugehörige Treibwalzen-Drehachse drehbar sind, wobei die jeweilige Treibwalzen-Drehachse zur Wellen-Rotationsachse schräg ausgerichtet ist, so dass im Antriebs-Betrieb des Linearantriebs (16) bei rotierender Antriebswelle (20) die Treibwalzen (34-39) im Kontakt mit dem Wellen-Antriebsabschnitt (20b) in Drehung um die jeweilige Treibwalzen-Drehachse versetzbar sind, wobei die Schubeinheit fest mit der Schublade verbunden ist, wobei die Länge der Antriebswelle etwas größer als die Nennlänge der Schublade ist, welche in Bewegungsrichtung der Schublade betrachtet wird.

2. Schublade mit einem Linearantrieb nach Anspruch 1, **dadurch gekennzeichnet, dass** eine Treibwalze (34-39) einen Kontaktkörper (60) mit einem im Wesentlichen zylindrischen Kontaktabschnitt (63) aufweist, wobei der Kontaktabschnitt (63) mit dem Wellen-Antriebsabschnitt (20b) in Kontakt ist.

3. Schublade mit einem Linearantrieb nach Anspruch 1 oder Anspruch 2, **dadurch gekennzeichnet, dass** eine Treibwalze (34-39) einen Kontaktkörper (60) mit einem Kontaktabschnitt (63) aufweist, wobei der Kontaktabschnitt (63) gegenüber einer zylindrischen Außenform eine etwas nach innen gewölbte Außenform und/oder eine etwas nach außen gewölbte Außenform aufweist, wobei der Kontaktabschnitt (63) mit dem Wellen-Antriebsabschnitt (20b) in Kontakt ist.

4. Schublade mit einem Linearantrieb nach einem der vorhergehenden Ansprüche, **dadurch gekennzeichnet, dass** die mehreren Treibwalzen (34-39) die gleiche Schrägstellung zur Antriebswelle (20) aufweisen mit jeweils einem gleichen Winkel der Drehachse der Treibwalze (34-39) zur Wellen-Längsachse der Antriebswelle (20).

5. Schublade mit einem Linearantrieb nach einem der vorhergehenden Ansprüche, **dadurch gekennzeichnet, dass** die Schubeinheit (23) einen Grundkörper (27) aufweist, wobei der Grundkörper (27) einstückig ausgebildet ist.

6. Schublade mit einem Linearantrieb nach einem der vorhergehenden Ansprüche, **dadurch gekennzeichnet, dass** die Treibwalzen (34-39) derart positioniert sind, dass jeweils ein Randabschnitt des Kontaktabschnitts (63) jeder Treibwalze (34-39), der radial am nächsten zur Wellen-Längsachse vorhanden ist, bis zu einer Umfangslinie reicht, die mit dem Durchmesser der Antriebswelle (20) korreliert, vorzugsweise zu einer Umfangslinie reicht, die identisch ist mit dem Außenumfang der Antriebswelle (20).

7. Schublade mit einem Linearantrieb nach einem der vorhergehenden Ansprüche, **dadurch gekennzeichnet, dass** eine Treibwalze (34-39) an einem Lagerelement (28-33) aufgenommen ist, wobei das Lagerelement (28-33) einstückig ist oder zwei zusammensetzbare Lagerelement-Hälften (28a, 28b) umfasst.

8. Schublade mit einem Linearantrieb nach einem der vorhergehenden Ansprüche, **dadurch gekennzeichnet, dass** eine Treibwalze (34-39) an einem Lagerelement (28-33) aufgenommen ist, wobei das Lagerelement (28-33) in eine passende Aufnahme (45-50) an einem Grundkörper (27) der Schubeinheit (23) einsteckbar oder einschraubbar ist.

9. Schublade mit einem Linearantrieb nach einem der vorhergehenden Ansprüche, **dadurch gekennzeichnet, dass** die Schubeinheit (23) einen Grundkörper (27) aufweist, der mehrere Aufnahmen (45-50) umfasst, wobei in jede Aufnahme (45-50) jeweils ein Lagerelement (28-33) für eine Treibwalze (34-39) insbesondere lösbar einsetzbar ist.

10. Schublade mit einem Linearantrieb nach einem der vorhergehenden Ansprüche, **dadurch gekennzeichnet, dass** eine Treibwalze (34-39) in einem Lagerelement (28-33) lösbar eingesetzt ist, z. B. verrastet oder eingeschnappt oder angeschraubt ist.

11. Schublade mit einem Linearantrieb nach einem der vorhergehenden Ansprüche, **dadurch gekennzeichnet, dass** am Grundkörper (27) der Schubeinheit (23) zwei Einsetzseiten vorhanden sind, wobei eine erste Einsetzseite eine zu einer ersten zur Antriebswelle (20) axialen Richtung hin offene Aufnahme (45-47) für die Unterbringung von zumindest einem Lagerelement (28-30) aufweist, und wobei eine zweite Einsetzseite eine zu einer zweiten zur Antriebswelle (20) axialen Richtung hin offene Aufnahme (48-50) für eine Unterbringung eines weiteren Lagerelements (31-33) aufweist.

12. Schublade mit einem Linearantrieb nach einem der vorhergehenden Ansprüche, **dadurch gekennzeichnet, dass** eine Antriebseinheit (18) derart vorhanden ist, dass eine treibende Welle der Antriebseinheit (18) winklig vorzugsweise senkrecht zur Wellen-Längsachse der Antriebswelle (20) steht.

13. Möbel (1) mit einer Schublade mit einem Linearantrieb nach einem der vorhergehenden Ansprüche.

## Claims

1. Drawer with a linear drive (16) for the linear movement of the drawer, wherein the linear drive (16) comprises a drive shaft (20), which can be rotated about a longitudinal axis of the shaft and has a shaft drive portion (20b) of the drive shaft (20), and also comprises a pushing unit (23), which can be coupled to the movable part, wherein the pushing unit (23) is accommodated on the drive shaft (20) such that, when the drive shaft (20) is rotating, the pushing unit (23) moves relative to the drive shaft (20) in the direction of the longitudinal axis of the shaft, wherein the pushing unit (23) comprises a plurality of rotatable driving rollers (34-39), which are accommodated on a respective bearing element (28-33) of the pushing unit (23), wherein the driving rollers (34-39) have a basic roller shape, and are in contact with the shaft drive portion (20b), and the plurality of driving rollers (34-39) can each be rotated about an associated driving-roller axis of rotation, wherein the respective driving-roller axis of rotation is oriented obliquely in relation to the axis of rotation of the shaft, and therefore during driving operation of the linear drive (16), when the drive shaft (20) is rotating, the driving rollers (34-39) in contact with the shaft drive portion (20b) can be made to rotate about the respective driving-roller axis of rotation, wherein the pushing unit is fixed to the drawer, wherein the length of the drive shaft is somewhat greater than the nominal length of the drawer, as seen in the movement direction of the drawer.

2. Drawer with a linear drive according to Claim 1, **characterized in that** a driving roller (34-39) has a contact body (60) with an essentially cylindrical contact portion (63), wherein the contact portion (63) is in contact with the shaft drive portion (20b).

3. Drawer with a linear drive according to Claim 1 or Claim 2, **characterized in that** a driving roller (34-39) has a contact body (60) with a contact portion (63), wherein the contact portion (63) has, in comparison with a cylindrical external shape, an external shape which is curved somewhat inwards and/or an external shape which is curved somewhat outwards, wherein the contact portion (63) is in contact with the shaft drive portion (20b).

4. Drawer with a linear drive according to one of the preceding claims, **characterized in that** the plurality of driving rollers (34-39) have the same oblique positioning in relation to the drive shaft (20), each with the same angle of the axis of rotation of the driving roller (34-39) in relation to the longitudinal axis of the drive shaft (20).

5. Drawer with a linear drive according to one of the preceding claims, **characterized in that** the pushing unit (23) has a main body (27), wherein the main body (27) is formed in one piece.

6. Drawer with a linear drive according to one of the preceding claims, **characterized in that** the driving rollers (34-39) are positioned such that a respective edge portion of the contact portion (63) of each driving roller (34-39) which is closest to the longitudinal axis of the shaft in the radial direction extends up to a circumferential line which correlates with the diameter of the drive shaft (20), preferably extends up to a circumferential line which is identical with the outer circumference of the drive shaft (20).

7. Drawer with a linear drive according to one of the preceding claims, **characterized in that** a driving roller (34-39) is accommodated on a bearing element (28-33), wherein the bearing element (28-33) is in one piece or comprises two bearing-element halves (28a, 28b) which can be fitted together.

8. Drawer with a linear drive according to one of the preceding claims, **characterized in that** a driving roller (34-39) is accommodated on a bearing element (28-33), wherein the bearing element (28-33) can be fitted or screwed into a matching mount (45-50) in a main body (27) of the pushing unit (23).

9. Drawer with a linear drive according to one of the preceding claims, **characterized in that** the pushing unit (23) has a main body (27), which comprises a plurality of mounts (45-50), wherein a respective bearing element (28-33) for a driving roller (34-39) can be inserted, in particular in a releasable manner, into each mount (45-50).

10. Drawer with a linear drive according to one of the preceding claims, **characterized in that** a driving roller (34-39) is inserted in a releasable manner, e.g. latched, snap-fitted or screwed on, in a bearing element (28-33).

11. Drawer with a linear drive according to one of the preceding claims, **characterized in that** two insertions sides are present on the main body (27) of the pushing unit (23), wherein a first insertion side has a mount (45-47) for accommodating at least one bearing element (28-30), the mount being open in relation to a first axial direction in respect of the drive shaft (20), and wherein a second insertion side has a mount (48-50) for accommodating a further bearing element (31-33), the mount being open in relation to a second axial direction in respect of the drive shaft (20).

12. Drawer with a linear drive according to one of the preceding claims, **characterized in that** a drive unit (18) is present such that a driving shaft of the drive unit (18) is positioned at an angle, preferably perpendicularly, in relation to the longitudinal axis of the drive shaft (20).

13. Piece of furniture (1) having a drawer with a linear drive according to one of the preceding claims.

## Revendications

1. Tiroir muni d'un entraînement linéaire (16) pour le déplacement linéaire du tiroir, l'entraînement linéaire (16) comprenant un arbre d'entraînement (20) à rotation autour d'un axe longitudinal d'arbre, muni d'une section d'entraînement d'arbre (20b) de l'arbre d'entraînement (20), et une unité de poussée (23) pouvant être couplée à la partie mobile, l'unité de poussée (23) étant reçue sur l'arbre d'entraînement (20) de telle sorte que lorsque l'arbre d'entraînement (20) tourne, l'unité de poussée (23) se déplace en direction de l'axe longitudinal d'arbre par rapport à l'arbre d'entraînement (20), l'unité de poussée (23) comprenant plusieurs cylindres entraîneurs rotatifs (34-39) reçus chacun sur un élément de palier respectif (28-33) de l'unité de poussée (23), les cylindres entraîneurs (34-39) présentant une forme de base de cylindre et étant en contact avec la section d'entraînement d'arbre (20b), et les plusieurs cylindres entraîneurs (34-39) étant chacun rotatifs autour d'un axe de rotation de cylindre entraîneur correspondant, l'axe de rotation de cylindre entraîneur respectif étant orienté de manière oblique par rapport à l'axe de rotation d'arbre, de telle sorte que dans le mode d'entraînement de l'entraînement linéaire (16), lorsque l'arbre d'entraînement (20) tourne, les cylindres entraîneurs (34-39) peuvent être mis en rotation autour de l'axe de rotation de cylindre entraîneur respectif en contact avec la section d'entraînement d'arbre (20b), l'unité de poussée étant reliée de manière fixe au tiroir, la longueur de l'arbre d'entraînement étant légèrement supérieure à la longueur nominale du tiroir, vue dans la direction de déplacement du tiroir.

2. Tiroir muni d'un entraînement linéaire selon la revendication 1, **caractérisé en ce qu'**un cylindre entraîneur (34-39) comprend un corps de contact (60) muni d'une section de contact essentiellement cylindrique (63), la section de contact (63) étant en contact avec la section d'entraînement d'arbre (20b).

3. Tiroir muni d'un entraînement linéaire selon la revendication 1 ou la revendication 2, **caractérisé en ce qu'**un cylindre entraîneur (34-39) comprend un corps de contact (60) muni d'une section de contact (63), la section de contact (63) présentant, par rapport à une forme extérieure cylindrique, une forme extérieure légèrement bombée vers l'intérieur et/ou une forme extérieure légèrement bombée vers l'extérieur, la section de contact (63) étant en contact avec la section d'entraînement d'arbre (20b).

4. Tiroir muni d'un entraînement linéaire selon l'une quelconque des revendications précédentes, **caractérisé en ce que** les plusieurs cylindres entraîneurs (34-39) ont la même position oblique par rapport à l'arbre d'entraînement (20), chacun avec un même angle de l'axe de rotation du cylindre entraîneur (34-39) par rapport à l'axe longitudinal d'arbre de l'arbre d'entraînement (20) .

5. Tiroir muni d'un entraînement linéaire selon l'une quelconque des revendications précédentes, **caractérisé en ce que** l'unité de poussée (23) comprend un corps de base (27), le corps de base (27) étant configuré d'un seul tenant.

6. Tiroir muni d'un entraînement linéaire selon l'une quelconque des revendications précédentes, **caractérisé en ce que** les cylindres entraîneurs (34-39) sont positionnés de telle sorte que, dans chaque cas, une section de bord de la section de contact (63) de chaque cylindre entraîneur (34-39), qui est présente radialement le plus près de l'axe longitudinal d'arbre, s'étend jusqu'à une ligne circonférentielle qui est en corrélation avec le diamètre de l'arbre d'entraînement (20), de préférence s'étend jusqu'à une ligne circonférentielle qui est identique à la circonférence extérieure de l'arbre d'entraînement (20).

7. Tiroir muni d'un entraînement linéaire selon l'une quelconque des revendications précédentes, **caractérisé en ce qu'**un cylindre entraîneur (34-39) est reçu sur un élément de palier (28-33), l'élément de palier (28-33) étant d'un seul tenant ou comprenant deux moitiés d'élément de palier assemblables (28a, 28b).

8. Tiroir muni d'un entraînement linéaire selon l'une quelconque des revendications précédentes, **caractérisé en ce qu'**un cylindre entraîneur (34-39) est reçu sur un élément de palier (28-33), l'élément de palier (28-33) pouvant être inséré ou vissé dans un réceptacle adapté (45-50) sur un corps de base (27) de l'unité de poussée (23) .

9. Tiroir muni d'un entraînement linéaire selon l'une quelconque des revendications précédentes, **caractérisé en ce que** l'unité de poussée (23) comprend un corps de base (27), qui comprend plusieurs réceptacles (45-50), un élément de palier respectif (28-33) pour un cylindre entraîneur (34-39) pouvant être introduit, notamment de manière amovible, dans chaque réceptacle (45-50).

10. Tiroir muni d'un entraînement linéaire selon l'une quelconque des revendications précédentes, **caractérisé en ce qu'**un cylindre entraîneur (34-39) est inséré de manière amovible dans un élément de palier (28-33), p. ex. est encliqueté ou enclenché ou vissé.

11. Tiroir muni d'un entraînement linéaire selon l'une quelconque des revendications précédentes, **caractérisé en ce que** deux côtés d'insertion sont présents sur le corps de base (27) de l'unité de poussée (23), un premier côté d'insertion comprenant un réceptacle (45-47) ouvert dans une première direction axiale vers l'arbre d'entraînement (20) pour le logement d'au moins un élément de palier (28-30), et un deuxième côté d'insertion comprenant un réceptacle (48-50) ouvert dans une deuxième direction axiale vers l'arbre d'entraînement (20) pour le logement d'un autre élément de palier (31-33).

12. Tiroir muni d'un entraînement linéaire selon l'une quelconque des revendications précédentes, **caractérisé en ce qu'**une unité d'entraînement (18) est présente, de telle sorte qu'un arbre d'entraînement de l'unité d'entraînement (18) se situe à un angle, de préférence perpendiculairement, par rapport à l'axe longitudinal d'arbre de l'arbre d'entraînement (20).

13. Meuble (1) comprenant un tiroir muni d'un entraînement linéaire selon l'une quelconque des revendications précédentes.
